# EUROPÄISCHE PATENTSCHRIFT

(11) **EP 0 376 320 B1**
(45) Veröffentlichungstag und Bekanntmachung des Hinweises auf die Patenterteilung: **22.09.1993**
(21) Anmeldenummer: 89124091.3
(22) Anmeldetag: 28.12.1989
(51) Int. Cl.: B60R 22/20

(54) **Höhenverstellbarer Umlenkbeschlag für Sicherheitsgurte von Kraftfahrzeugen**
Return anchor, adjustable in height, for motor vehicle seat belts
Ferrure de renvoi, réglable en hauteur, pour ceintures de sécurité de véhicule

(30) Priorität: 29.12.1988 DE 3844258
(43) Veröffentlichungstag der Anmeldung: 04.07.1990
(73) Patentinhaber: AUTOLIV DEVELOPMENT AKTIEBOLAG, 447 83 Vargarda (SE)
(72) Erfinder: Steinhüser, Günter, D-2208 Glückstadt (DE)
(74) Vertreter: Laufhütte, Dieter, Dr.-Ing.

(56) Entgegenhaltungen:
- EP-A- 0 049 572
- EP-A- 0 182 337
- EP-A- 0 290 621
- DE-A- 3 151 019
- DE-A- 3 710 894
- DE-A- 3 713 137
- DE-U- 8 322 546
- DE-U- 8 412 788

## Beschreibung

Die Erfindung betrifft einen höhenverstellbaren Umlenkbeschlag für Sicherheitsgurte von Kraftfahrzeugen mit einem in einer durch parallele Stege einer fahrzeugfest gehaltenen Schiene gebildeten Führungsnut längsverschieblich geführten schlittenartigen Teil, in dem ein von einer Druckfeder beaufschlagter Verriegelungshebel um seine den Umlenkbeschlag tragende Achse schwenkbar gelagert ist, mit in einem längsverlaufenden Stegteil der Schiene im Abstand voneinander angeordneten Rastöffnungen, in jeweils eine von denen ein Rastvorsprung des Verriegelungshebels zu dessen Blockierung gegenüber der Schiene eingreifen kann und mit einer Einrichtung zur Lösung der Blockierung.

Bei einem aus der gattungsbildenden DE-A 37 13 137 bekannten Umlenkbeschlag dieser Art hält die Druckfeder normalerweise den Rastvorsprung des Verriegelungshebels außer Eingriff mit den Rastöffnungen. Wird jedoch auf den durch den Umlenkbeschlag zu dem fahrzeugfest gehaltenen Sicherheitsgurtaufroller mit Blockierautomatik umgelenkten Schultergurt ein Zug ausgeübt, wird der Verriegelungshebel nach unten gezogen und in Richtung auf die Rastöffnungen ausgeschwenkt, so daß der Rastvorsprung blockierend in die nächstfolgende Rastöffnung einfällt. Der bekannte Umlenkbeschlag ist also normalerweise gegenüber der Schiene, die üblicherweise an dem sogenannten B-Pfosten des Fahrzeugs befestigt ist, nicht verankert. Die Höheneinstellung erfolgt bei dem bekannten Umlenkbeschlag durch einen Bowdenzug in Abhängigkeit von der Sitzverstellung, wobei der Bowdenzug gegen die Kraft einer Feder ausziehbar ist, so daß der Verriegelungshebel bei auf den Schultergurt wirkenden Auszugskräften, die die federnde Haltekraft des Bowdenzuges und die Kraft der den Verriegelungshebel beaufschlagenden Druckfeder überwinden, in verriegelnden Eingriff mit einer Rastöffnung gelangt.

Besondere Probleme können sich ergeben, wenn der durch den höhenverstellbaren Umlenkbeschlag geführte Gurt zusätzlich mit einem Gurtstrammer ausgerüstet wird. Im Crash-Fall ergeben sich dabei beim Strammen des Gurtbandes gegebenenfalls so hohe Beschleunigungen des über den Schlitten in der Schiene geführten Umlenkbeschlags, daß dieser, sollte er vorher nicht in einer Raststellung eingerastet sein, trotz des federbeaufschlagten Rasthebels nicht mehr in eine der Rastöffnungen der Schiene einrasten kann.

Aufgabe der Erfindung ist es, einen einfach aufgebauten und funktionssicheren Umlenkbeschlag der eingangs angegebenen Art zu schaffen, der sich von Hand der Größe der zu sichernden Person anpassen läßt.

Erfindungsgemäß wird diese Aufgabe bei einem Umlenkbeschlag der gattungsgemäßen Art dadurch gelöst, daß die Druckfeder den Verriegelungshebel in Richtung auf die Eingriffsstellung des Rastvorsprunges in einer Rastöffnung beaufschlagt, daß an dem Verriegelungshebel ein durch eventuell wirkende Beschleunigungskräfte zusätzlich anklappbarer Hebel nach außen schwenkbar an der gleichen Seite angelenkt ist, an der der Rastvorsprung ausgebildet ist und daß eine manuelle Betätigungseinrichtung vorgesehen ist, mit der sich der Verriegelungshebel außer Eingriff mit den Rastöffnungen verschwenken läßt. Der Umlenkbeschlag ist erfindungsgemäß mit besonders einfach und funktionssicher ausgebildeten Teilen zu seiner Höhenverstellung versehen. Das wesentliche Teil des Verstellmechanismus wird durch den Verriegelungshebel gebildet. Bei dem erfindungsgemäßen Umlenkbeschlag dient das in der Schiene geführte schlittenartige Teil im wesentlichen der Führung des Verriegelungshebels bei einer Höhenverstellung, ohne daß aber das schlittenartige Teil im Sicherungsfall von dem Schultergurt ausgeübte Zugkräfte aufnehmen müßte, die allein durch den Verriegelungshebel auf die Verstellschiene übertragen werden. Da also das schlittenartige Teil im wesentlichen keine Trag- und Haltefunktion hat, kann es in leichter Bauweise ausgeführt werden und vorzugsweise aus einem Kunststoffteil bestehen.

Der durch eventuell wirkende Beschleunigungskräfte zusätzlich ausklappbare Hebel ist an der gleichen Seite des Verriegelungshebels angelenkt, an dem die Rastnase ausgebildet ist. Bei Auftreten hoher Beschleunigungen, wie sie beispielsweise im Crash-Fall durch Strammen des Gurtstrammers auftreten, erhält dieser sonst in einer Vertiefung des Verriegelungshebels anliegende kleine Hebel eine Beschleunigungskomponente nach außen und schwenkt in Richtung zur Schienenseite soweit aus, daß er an der nächsten Rastöffnungsseite hängen bleibt und damit dem zweiarmigen Rasthebel ein Moment um den Drehbeutel erteilt, so daß der Rastvorsprung in die nächste Rastöffnung einsteuert.

Zweckmäßigerweise ist die Betätigungseinrichtung zum Lösen der Verrastung des Verriegelungshebels so ausgebildet, daß sie in ihrer Ruhestellung die Eingriffsstellung des Verriegelungshebels in einer Rastöffnung sichert. Aufgrund der erfindungsgemäßen Ausgestaltung des Verriegelungshebels sind zwar im Sicherungsfall keine auf den Verriegelungshebel wirkenden Drehmomente zu erwarten, die dessen Verrastung mit der Verstellschiene lösen könnten. Da dennoch im Falle eines Unfalls oder Crash Beschleunigungskräfte auftreten können, die in unvorhersehbarer Weise auch auf den Verriegelungshebel wirken, ist eine zusätzliche Sicherung des Verriegelungshebels durch die Betätigungseinrichtung in ihrer Ruhestellung zweckmäßig. Da eventuell auftretende Beschleunigungskräfte keine große Rückwirkung auf den Verriegelungshebel haben können, braucht nur eine Sicherung vorgesehen zu werden, die eventuellen Öffnungsmomenten des Verriegelungshebels verhältnismäßig geringe Gegenkräfte entgegensetzt.

In weiterer Ausgestaltung der Erfindung ist vorgesehen, daß der Verriegelungshebel aus einem zweiarmigen Hebel besteht, dessen einer Arm den Rastvorsprung trägt und an dessen anderem Arm die Betätigungseinrichtung angreift. Bei dieser Ausgestaltung befindet sich also der kreisscheibenförmige Bereich des Verriegelungshebels, der dessen Schwenkachse definiert, in dessen mittleren Bereich zwischen den beiden Hebelarmen.

Zweckmäßigerweise ist das schlittenartige Teil durch eine Rollbandfeder oder dgl. in einer Verschieberichtung beaufschlagt. Diese Ausgestaltung vereinfacht die Verstellung, da die zu sichernde Person den Umlenkbeschlag zu seiner Höheneinstellung nur in einer Richtung zu verschieben braucht, während eine Verschiebung in der anderen Richtung automatisch durch die Feder erfolgt.

In weiterer Ausgestaltung der Erfindung ist vorgesehen, daß die Schiene in ihrem nicht mit Rastöffnungen versehenen Steg im Abstand der Rastöffnungen mit Aussparungen versehen ist, in die jeweils in den Eingriffsstellungen des Rastvorsprunges des Verriegelungshebels in den Rastöffnungen ein federnder Arm des schlittenförmigen Teils eingreift. Diese Ausgestaltung ermöglicht es, daß bei einer Höhenverstellung des Umlenkbeschlages die richtigen Eingriffsstellungen gefühlt werden können, so daß ein möglicherweise umständliches Verschieben des Umlenkbeschlages zum Auffinden der richtigen Rastposition vermieden ist.

Zweckmäßigerweise besitzt die Verstellschiene ein C-förmiges Profil. Durch dieses C-förmige Profil ist die zwischen den seitlichen Stegen des Profils gebildete Nut bis auf einen vorderen Schlitz geschlossen, so daß der Verriegelungshebel und das schlittenartige Teil in einfacher Weise in der Führungsnut gehalten sind.

Die Betätigungseinrichtung kann in eine entsprechende dreieckige Ausnehmung oder Aussparung des Verriegelungshebels eingreifen. Bei dieser Formung der Aussparung im Verriegelungshebel ist eine einfachere Fertigung möglich, da keine zu engen Toleranzgrenzen eingehalten werden müssen. Zum anderen aber ist auch der Verriegelungshebel unabhängig von der Stellung der Betätigungseinrichtung. Steht somit beispielsweise der höhenverstellbare Umlenkbeschlag in einer Zwischenstellung, d. h. ist dieser nicht in eine der Rastöffnungen eingerastet und kommt es in dieser Stellung zum Unfall, muß die Druckfeder nur den Verriegelungshebel in die entsprechende Rastöffnung drücken, während der Betätigungshebel in seiner Stellung verbleiben kann. Dadurch wird in vorteilhafter Weise die Einsteuerzeit des Verriegelungshebels verkürzt. In Ruhestellung befindet sich der Betätigungshebel in einem Eckbereich der dreieckigen Ausnehmung und wird durch Federn einer Rasteinrichtung oder dergleichen gesichert.

In vorteilhafter Weise weist der Rastvorsprung des Verriegelungshebels in Rastrichtung eine steil abfallende Flanke und gegen Rastrichtung eine flach abfallende Flanke auf. Dadurch kann einerseits der Einsteuervorgang unter Last früher beginnen, zum anderen wird das Einsteuern des Rastvorsprungs des Verriegelungshebels bei entsprechend schneller Bewegung des schlittenförmigen Teils erst ermöglicht.

Zur weiteren Verbesserung und Beschleunigung des Einsteuervorgangs sind die Kanten der Rastöffnungen, die jeweils der steil abfallenden Flanke des vorbeibewegten Rastvorsprungs gegenüber liegen ins Innere der Schiene gebogen. Weiterhin sind die diesen vorgebogenen Kanten gegenüberliegenden Kanten mit nach Innen gewölbten Ausprägungen versehen, in welche der durch die Federkraft gegen die Seitenwand der Schiene gedrückte Rastvorsprung schon eingreift und damit in Richtung der Rastöffnung gelenkt wird.

Am Verriegelungshebel kann eine zweite Nase angeordnet sein, wobei diese punktsymmetrisch bezüglich der Achse zum Rastvorsprung ausgebildet ist. Bei sperrender Auslenkung des Verriegelungshebels greift diese Nase in eine entsprechende Aussparung der Schiene. Damit wird der höhenverstellbare Umlenkbeschlag auch in die der Verriegelungsrichtung entgegengesetzte Richtung festgelegt, so daß eine Bewegung des Umlenkbeschlags auch für den Fall unterbunden wird, daß sich das Fahrzeug überschlägt oder auf dem Dach liegen bleibt.

Gemäß einer weiteren bevorzugten Ausgestaltung der Erfindung ist die Druckfeder zur Beaufschlagung des Verriegelungshebels in einer Kammer untergebracht, die sich aus Mulden und einer Durchbrechung des Verriegelungshebels zusammensetzt. Dadurch läßt sich die Feder in vorteilhafter Weise in der Riegelplatte vormontieren und muß nur noch zusammen mit der Riegelplatte eingesetzt werden.

Weiterhin ist es vorteilhaft, wenn seitlich in der Schiene ungefähr gegenüber der in Rastrichtung letzten Rastöffnung ein in die Schiene hineinragender Vorsprung derart ausgeformt ist, daß dieser gegebenenfalls gegen die Ecke des Verriegelungshebels stößt, die dem Rastvorsprung gegenüberliegt und dadurch eine Zwangseinsteuerung des Verriegelungshebels einleitet. Hierdurch wird einerseits verhindert, daß das schlittenartige Teil aus der Schiene herausgezogen wird und zum anderen, daß der Verriegelungshebel zumindest in den letzten Rastvorsprung der Schiene eingerastet wird.

Gemäß einer weiteren vorteilhaften Ausgestaltung sind an dem schlittenartigen Teil zwei federnde Arme symmetrisch zueinander angeordnet, wobei diese jeweils in eine Rastöffnung bzw. gegenüberliegende Aussparung greifen, wenn der Rastvorsprung des Verriegelungshebels eingesteuert werden kann. Durch die symmetrische Anordnung dieser Federn wird eine Zentrierung des schlittenartigen Teils bewirkt und dessen Verkanten vermieden. Darüber hinaus wird durch das Vorbeiführen der Federn an den Rastöffnungen bzw. gegenüberliegenden Aussparungen ein entsprechendes Klick-Geräusch erzeugt, das dem Autofahrer auch akustisch anzeigt, wie weit er den Umlenkbeschlag verschiebt.

An der oberen Schale des schlittenförmigen Teils kann eine Buchse angeformt sein, durch die der Bolzen, auf dem der Verriegelungshebel aufsitzt, geführt ist. Durch diese Buchse wird der Umlenkbeschlag vom Bolzen und damit von mit diesem verbundenen Verriegelungshebel entkoppelt, so daß bei einem Drehen des Umlenkbeschlags kein Öffnungsmoment mehr auf die Riegelplatte wirkt. Weiterhin wird dadurch eine Vormontage des Umlenkbeschlags möglich, der nur auf die Buchse aufgebracht werden braucht. Beim Eindrehen des Bolzens wird darüber hinaus in vorteilhafter Weise ein schiefes Ansetzen und damit eine Beschädigung des Gewindes vermieden.

Die Erfindung wird nachstehend anhand mehrerer in der Zeichnung dargestellten Ausführungsbeispiele erläutert. In dieser zeigt:
- Fig. 1:: einen Schnitt durch eine Ausführungsform eines in einer Verstellschiene geführten Umlenkbeschlags und
- Fig. 2:: einen weiteren Schnitt durch den erfindungsgemäßen Umlenkbeschlag mit Verstellschiene.

In einer Verstellschiene 1 mit C-förmigem Profil, die beispielsweise an dem B-Pfosten eines Kraftfahrzeuges befestigt werden kann, ist ein schlittenförmiges Teil 2 aus Kunststoff längsverschieblich geführt, in dem ein zweiarmiger Verriegelungshebel 3 schwenkbar um einen eine Achse bildenden Bolzen 4 gehaltert ist. Der Bolzen 4 weist unterhalb seines Sechskantkopfes 5 einen gewindefreien Schaft 6 auf, an den unter Bildung einer Ringschulter ein im Durchmesser kleinerer mit einem Gewinde versehener Teil 7 anschließt. Das mit dem Gewinde versehene Teil 7 ist in eine Gewindebohrung des Verriegelungshebels 3 soweit eingeschraubt, daß sich die Ringschulter auf einer Seite des Verriegelungshebels 3 abstützt. Auf dem gewindefreien Schaft 6 des Schraubbolzens 4 ist in bekannter und daher nicht näher beschriebener Weise der Umlenkbeschlag für den Schultergurt frei drehbar gelagert. Dieser Umlenkbeschlag besteht aus einem im wesentlichen dreieckigen Teil, das unterhalb seiner Lagerbohrung mit einem zu dessen Basis parallelen Schlitz mit abgerundeten Kanten versehen ist, durch den der Schultergurt hindurchgeführt ist und über den dieser zu dem beispielsweise im Bodenbereich des Kraftfahrzeuges angeordneten Sicherheitsgurtaufroller mit Blockierautomatik verläuft.

Das schlittenförmige Teil 2 besteht aus einer unteren Schale sowie einer oberen Schale, die beide miteinander verrastet sind. Die beiden Schalen bestehen aus Kunststoffspritzgußteilen. Zwischen den beiden schalenförmigen Teilen ist der Verriegelungshebel 3 gehaltert.

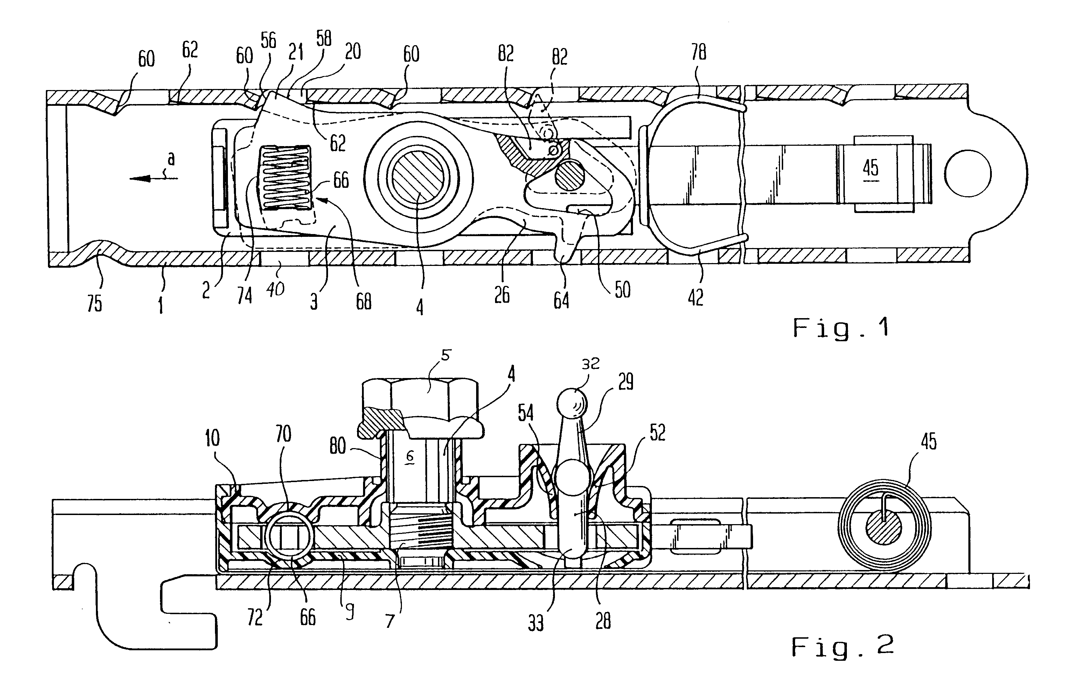

In dem Steg 19 der Profilschiene 1 sind in gleichmäßigen Abständen zueinander Rastausnehmungen 20 vorgesehen. In diese Rastausnehmungen 20 kann ein Rastvorsprung 21 eingreifen, der als hakenförmiges Teil an dem in Fig. 1 linken Arm 22 des Rasthebels 3 vorgesehen ist. Dieser hakenförmige Rastvorsprung 21 ist durch eine Druckfeder 23 in Richtung auf den Steg 19 beaufschlagt, so daß das hakenförmige Teil 21 in die Rastöffnungen 20 einschnappen und einrasten kann, wenn dieses auf eine solche Öffnung trifft. Die Druckfeder 23 stützt sich auf der dem Rastvorsprung 21 gegenüberliegenden Seite des Hebelarms 22 des Verriegelungshebels 3 ab und ist in einer entsprechenden Ausnehmung 25 des schlittenförmigen Teils 2 gehaltert.

Der andere Arm 26 des Verriegelungshebels 3 ist auf seiner aus Fig. 1 ersichtlichen Oberseite mit einer Ausnehmung 50 versehen. In diese Ausnehmung greift der untere Arm 28 eines zweiarmigen Betätigungshebels 29 ein, der um eine Achse 30 schwenkbar in dem oberen Schalenteil 10 des schlittenförmigen Teils 9 gelagert ist. Der andere Arm 31 des Hebels 29 ist mit einem Betätigungsknopf 32 versehen. Wird der Betätigungshebel 29 um die Achse 30, die quer zu der Verstellschiene 1 angeordnet ist, in einer zu der Mittelebene der Verstellschiene 1 parallelen Ebene verschwenkt, gleitet das untere Ende 33 des unteren Arms 28 aus seiner Mittelstellung, so daß der Verriegelungshebel 3 aus seiner Eingriffsstellung in seine ausgeschwenkte Stellung bewegt wird, in der der hakenförmige Rastvorsprung 21 aus den Rastöffnungen 20 herausgehoben ist. In dieser entriegelten Stellung läßt sich der Verriegelungshebel 3 zusammen mit dem schlittenförmigen Teil 9 in Längsrichtung der Verstellschiene 1 zur Höheneinstellung des Umlenkbeschlages verschieben.

An der unteren Schale 9 des schlittenförmigen Teils 2 greift weiterhin in der aus den Fig. 1 und 2 ersichtlichen Weise eine Rollbandfeder 45 an, die das schlittenförmige Teil 2 in der Verstellschiene 1 nach links zu verschieben trachtet.

Der Rastvorsprung 21 gemäß ist mit einer in Rastrichtung (Pfeilrichtung a) steil abfallenden und gegen Rastrichtung flach abfallenden Flanke 58 ausgebildet. Hierdurch kann der Rastvorsprung 21 leichter in die entsprechenden Rastöffnungen 20 eingreifen. Zur Verbesserung der Einsteuerung des Rastvorsprungs 21 sind auch die entsprechenden Kanten der Rastöffnungen in besonderer Weise ausgestaltet. Zunächst einmal sind ins Innere der Schiene 1 vorragende Kantenabschnitte 60 ausgeformt, in welche die steile Flanke 56 der Rastnase 21 eingreifen kann. Zum anderen sind an den jeweils gegenüberliegenden Kanten der Rastöffnungen 20 in der Schienenwand nach Ausprägungen 62 geformt, die eine entsprechende Führung für den gegebenenfalls vorbeistreichenden Rastvorsprung 21 des Verriegelungshebels 3 derart bilden, daß dieser in Richtung der Rastöffnung 20 innen gewölbte bewegt wird. Auf den Rasthebel 3 wirkt jeweils die Federkraft einer Druckfeder 66, die in einer Kammer 68 untergebracht ist, welche sich aus den Mulden 70 und 72 der oberen bzw. unteren Schlittenhälfte und einer entsprechenden Durchbrechung des Verriegelungshebels zusammensetzt. Die Druckfeder 66 stützt sich jeweils einseitig an der oberen und unteren Schlittenhälfte ab und beaufschlagt mit ihrer anderen Seite den Verriegelungshebel in senkrechter Richtung bezüglich der Vorschubrichtung des Schlittens (Pfeil a).

Auf der dem Verriegelungsvorsprung 21 diagonal gegenüberliegenden Seite des Verriegelungshebels 3 ist eine zweite Nase 64 ausgebildet, die jeweils in die Aussparungen 40 greifen kann.

Wie in Fig. 1 dargestellt, ist ungefähr gegenüber der in Rastrichtung letzten Rastöffnung 20 ein seitlich in die Schiene 1 hineinragender Vorsprung 75 derart ausgeformt, daß dieser gegebenenfalls gegen die Ecke des Verriegelungshebels 3 stößt, die dem Rastvorsprung gegenüberliegt und dadurch eine Zwangseinsteuerung des Verriegelungshebels einleitet. Der in die Schiene hineinragende Vorsprung 75 bildet darüber hinaus eine zusätzliche Sicherung dafür, daß verhindert wird, daß der Schlitten 2 aus der Schiene herausgezogen wird.

In der Ausführungsform gemäß den Fig. 1 und 2 besteht die Betätigungseinrichtung aus einem zweiarmigen in dem schlittenförmigen Teil 2 schwenkbar gelagerten Betätigungshebel dessen einer Arm 28 hier in eine dreieckige Ausnehmung 50 des Verriegelungshebels eingreift. In der Ruhestellung liegt der Betätigungshebel 29 mit seinem Arm 28 in einem Eckbereich der dreieckigen Ausnehmung 50, wie der Fig. 1 zu entnehmen ist. Der Betätigungshebel 29 ist durch an seinem unteren Arm 28 anliegende Federn 52 und 54 gesichert.

An der oberen Schale 10 des schlittenförmigen Teils 2 ist eine Buchse 80 angeformt, vorzugsweise angespritzt. Durch diese Buchse, auf der der in der Fig. 2 nicht dargestellte Umlenkbeschlag sitzt, ist der Bolzen 4 geführt.

Am schlittenförmigen Teil 2 sind zwei symmetrisch zueinander angeordnete federnde Arme 42 und 78 angeformt, die jeweils in gegenüberliegende Rastöffnungen 20 bzw. Ausnehmungen 40 schnappen und damit beim Bewegen des schlittenförmigen Teils 2 entlang der Schiene 1 ein Rastgeräusch erzeugen.

In Fig. 1 ist der Verriegelungshebel 3 mit durchgezogenen Linien in seiner Verriegelungsstellung dargestellt. Die strichpunktierten Linien entsprechen der Stellung des Verriegelungshebels 3 während der Längsverschiebung in der Schiene 1. Auf der der zweiten Nase 64 gegenüberliegenden Seite des Verriegelungshebels 3 ist ein schwenkbarer zusätzlicher Hebel 82 dargestellt, der in seiner Normalstellung in eine entsprechende Ausnehmung des Verriegelungshebels 3 eingeklappt ist. In dieser eingeklappten Grundstellung ist der zusätzliche Hebel 82 so angeordnet, daß gegebenenfalls in Pfeilrichtung a wirkende Beschleunigungskräfte diesen aufgrund seiner Trägheit nach außen schwenken, wie dies in den gestrichelten Linien angedeutet ist. Damit hakt dieser zusätzliche Hebel bei Beschleunigung dieses schlittenförmigen Teils 2 im Falle eines Crashs in die nächste Rastöffnung ein und übt auf den Verriegelungshebel 3 ein Drehmoment derart aus, daß der Rastvorsprung 21 in eine entsprechende Rastöffnung 20 eingreift.

## Patentansprüche

1. Höhenverstellbarer Umlenkbeschlag für Sicherheitsgurte von Kraftfahrzeugen
mit einem in einer durch parallele Stege einer fahrzeugfest gehaltenen Schiene (1) gebildeten Führungsnut längsverschieblich geführten schlittenartigen Teil (2), in dem ein von einer Druckfeder (23, 66) beaufschlagter Verriegelungshebel (3) um seine den Umlenkbeschlag tragende Achse (4) schwenkbar gelagert ist, mit in einem der beiden längsverlaufenden Stege der Schiene im Abstand voneinander angeordneten Rastöffnungen (20), in eine von denen ein Rastvorsprung (21) des Verriegelungshebels (3) zu dessen Blockierung gegenüber der Schiene (1) eingreifen kann und
mit einer Einrichtung zur Lösung der Blockierung,
**dadurch gekennzeichnet,**
daß die Druckfeder (66) den Verriegelungshebel (3) in Richtung auf die Eingriffsstellung des Rastvorsprungs (21) in einer Rastöffnung (20) beaufschlagt, daß an dem Verriegelungshebel (3) ein durch eventuell wirkende Beschleunigungskräfte zusätzlich ausklappbarer Hebel (82) nach außen schwenkbar an der gleichen Seite angelenkt ist, an der der Rastvorsprung (21) ausgebildet ist und daß eine manuelle Betätigungseinrichtung vorgesehen ist, mit der sich der Verriegelungshebel (3) außer Eingriff mit den Rastöffnungen (20) verschwenken läßt.

2. Umlenkbeschlag nach Anspruch 1, dadurch gekennzeichnet, daß die Betätigungseinrichtung in ihrer Ruhestellung die Eingriffsstellung des Verriegelungshebels (3) in einer Rastöffnung (20) sichert.

3. Umlenkbeschlag nach Anspruch 1 oder 2, dadurch gekennzeichnet, daß der Verriegelungshebel (3) aus einem zweiarmigen Hebel besteht, dessen einer Arm (22) den Rastvorsprung (21) trägt und an dessen anderem Arm (26) die Betätigungseinrichtung angreift.

4. Umlenkbeschlag nach einem der vorhergehenden Ansprüche, dadurch gekennzeichnet, daß das schlittenartige Teil (2) durch eine Rollbandfeder (45) in einer Verschieberichtung beaufschlagt ist.

5. Umlenkbeschlag nach einem der Ansprüche 1 bis 4, dadurch gekennzeichnet, daß die Schiene (1) in ihrem nicht mit Rastöffnungen versehenen Steg im Abstand der Rastöffnungen (20) mit Aussparungen (40) versehen ist, in die jeweils in den Eingriffsstellungen des Rastvorsprunges (21) des Verriegelungshebels (3) in den Rastöffnungen (20) ein federnder Arm (42) des schlittenförmigen Teils (2) eingreift.

6. Umlenkbeschlag nach einem der Ansprüche 1 bis 5, dadurch gekennzeichnet, daß die Schiene (1) ein C-förmiges Profil besitzt.

7. Umlenkbeschlag nach einem der Ansprüche 1 bis 6, dadurch gekennzeichnet, daß das schlittenförmige Teil 2 aus zwei miteinander verrasteten Schalen aus Kunststoffspritzguß besteht.

8. Umlenkbeschlag nach einem der Ansprüch 1 bis 7, dadurch gekennzeichnet, daß die Betätigungseinrichtung aus einem zweiarmigen, in dem schlittenförmigen Teil (2) schwenkbar gelagerten Betätigungshebel (29) besteht, dessen einer Arm (28) in eine dreieckige Ausnehmung oder Aussparung (50) des Verriegelungshebels (3) eingreift.

9. Umlenkbeschlag nach Anspruch 8, dadurch gekennzeichnet, daß die Ruhestellung des Betätigungshebels (29), dessen inneres Ende (33) sich in einem Eckbereich der dreieckigen Ausnehmung (50) befindet, durch Federn (52, 54) einer Rasteinrichtung gesichert ist.

10. Umlenkbeschlag nach einem der Ansprüche 1 bis 9, dadurch gekennzeichnet, daß der Rastvorsprung (21) in Rastrichtung eine steil abfallende Flanke (56) und gegen Rastrichtung eine flach abfallende Flanke (58) aufweist.

11. Umlenkbeschlag nach einem der Ansprüche 1 bis 10, dadurch gekennzeichnet, daß Kanten (60) der Rastöffnungen (20) derart ins Innere der Schiene (1) gebogen sind, daß der Rastvorsprung leichter in die Rastöffnung (20) eingreifen kann.

12. Umlenkbeschlag nach einem der Ansprüche 1 bis 11, dadurch gekennzeichnet, daß am Verriegelungshebel (3) eine zweite Nase (64) punktsymmetrisch bezüglich der Achse (4) zur Nase (21) ausgebildet ist, die bei sperrender Auslenkung des Verriegelungshebels (3) in eine der Aussparungen (40) eingreift.

13. Umlenkbeschlag nach einem der Ansprüche 1 bis 12, dadurch gekennzeichnet, daß die Druckfeder (66) zur Beaufschlagung des Verriegelungshebels (3) in einer Kammer (68) untergebracht ist, die sich aus Mulden (70, 72) und einer Durchbrechung (74) des Verriegelungshebels (3) zusammensetzt.

14. Umlenkbeschlag nach einem der Ansprüche 1 bis 13, dadurch gekennzeichnet, daß ungefähr gegenüber der in Rastrichtung letzten Rastöffnung (20) ein seitlich in die Schiene (1) hineinragender Vorsprung (75) derart ausgeformt ist, daß dieser gegebenenfalls gegen die Ecke des Verriegelungshebels (3) stößt, die dem Rastvorsprung (21) gegenüberliegt und dadurch eine Zwangseinsteuerung des Verriegelungshebels einleitet.

15. Umlenkbeschlag nach Anspruch 5 oder einem von Anspruch 5 abhängigen Anspruch, dadurch gekennzeichnet, daß zusätzlich zu dem federnden Arm (42) ein symmetrisch zu diesem angeordneter federnder Arm (78) jeweils in eine Rastöffnung (20) greift, wenn dieser in eine der Aussparungen (40) greift.

## Claims

1. Vertically adjustable deflector fitting for safety belts of motor vehicles
with a sled-like part (2) guided for longitudinal displacement in a guide groove formed by parallel webs of a rail (1) securely mounted to the vehicle, in which sled-like part (2) a locking lever (3) pressurised by a compression spring (23, 66) is pivot-mounted around its axis (4) bearing the deflector fitting,
with latching openings (20) arranged at intervals in one of the two longitudinal webs of the rail, in one of which latching openings (20) a latching projection (21) of the locking lever (3) can engage in order to arrest the latter against the rail (1), and
with a device for releasing said lock,
**characterised in that**
the compression spring (66) pressurises the locking lever (3) in the direction of the engagement position of the latching projection (21) in a latching opening (20), that pivot-mounted on the locking lever (3) on the same side at which the latching projection (21) is formed, is an outwardly slewing lever (82) which can be additionally unfolded as a result of any acceleration forces acting upon it, and that a manual actuating device is provided with which the locking lever (3) can be slowed out of engagement with the latching openings (20).

2. Deflector fitting according to Claim 1, characterised in that the actuating device in its rest position secures the engagement position of the locking lever (3) in a latching opening (20).

3. Deflector fitting according to Claim 1 or 2, characterised in that the locking lever (3) consists of a two-arm lever, of which one arm (22) carries the latching projection (21) and the other arm (26) is operated by the actuating device.

4. Deflector fitting according to one of the preceding claims, characterised in that the sled-like port (2) is pressurised by a flat spiral spring (45) in one direction of displacement.

5. Deflector fitting according to one of claims 1 to 4, characterised in that the rail (1) is provided in the web not containing the latching openings with recesses (40) spaced at the same intervals as those of the latching openings (20), in which recesses (40) a spring-action arm (42) of the sled-like part (2) engages in each of the engagement positions of the latching projection (21) of the locking arm (3) in the latching openings (20).

6. Deflector fitting according to one of claims 1 to 5, characterised in that the rail (1) exhibits a C-shaped or channel cross section.

7. Deflector fitting according to one of claims 1 to 6, characterised in that the sled-shaped part (2) consists of two interlocking shells of injection-moulded plastic material.

8. Deflector fitting according to one of claims 1 to 7, characterised in that the actuating device consists of a two-arm operating lever (29) which is pivot-mounted in the sled-shaped part (2), of which lever (29) one arm (28) engages in a triangular depression or recess (50) of the locking lever (3).

9. Deflector fitting according to Claim 8, characterised in that the rest position of the operating lever (29), the inner end (33) of which is located in a corner area of the triangular recess (50), is secured by springs (52, 54) of a latching device.

10. Deflector fitting according to one of claims 1 to 9, characterised in that the latching projection (21) in the latching direction exhibits a steeply angled flank (56), and counter to the latching direction a shallow-angled flank (58).

11. Deflector fitting according to one of claims 1 to 10, characterised in that the edges (60) of the latching openings (20) are bent towards the inside of the rail (1) such that the latching projection can engage with greater ease in the latching opening (20).

12. Deflector fitting according to one of claims 1 to 11, characterised in that, formed at the locking lever (3) is a second pawl (64) which is centrically symmetric in relation to the axis (4) to the latching projection (21), which pawl (64) engages in one of the recesses (40) when the locking lever (3) is deflected into its locking position.

13. Deflector fitting according to one of claims 1 to 12, characterised in that the compression spring (66) for pressurising the locking lever (3) is housed in a chamber (68) which is composed of shells (70, 72) and a penetration (74) of the locking lever (3).

14. Deflector fitting according to one of claims 1 to 13, characterised in that roughly opposite to the last latching opening (20) in the direction of latching, a projection (75) protruding laterally into the rail, (1) is formed such that it may collide with the corner of the locking lever (3) located opposite to the latching projection (21), thus imparting positive engagement actuation to the locking lever.

15. Deflector fitting according to Claim 5 or a claim dependent upon Claim 5, characterised in that, in addition to the spring-action arm (42), a spring-action arm (78) arranged symmetrically thereto engages in each case in a latching opening (20) when the other engages in one of the recesses (40).

## Revendications

1. Ferrure de renvoi réglable en hauteur pour ceintures de sécurité d'automobiles, comportant une pièce à la manière d'un chariot (2) guidée en sens longitudinal dans une rainure de guidage formée par des barrettes parallèles d'un rail solidaire du véhicule, pièce dans laquelle est logé de manière à pouvoir pivoter autour de son axe (4) portant la ferrure de renvoi un levier de verrouillage (3) contraint par un ressort de pression (23, 66), comportant par ailleurs des ouvertures d'encliquetage (20) disposées de manière réciproquement espacées dans une des deux barrettes longitudinales du rail, dans l'une desquelles un ergot d'encliquetage (21) du levier de verrouillage (3) peut s'engager pour bloquer ce dernier par rapport au rail (1), et un dispositif pour dégager le blocage,
caractérisée en ce que le ressort de pression (66) contraint le levier de verrouillage (3) en direction de la position d'engagement de l'ergot d'encliquetage (21) dans une ouverture d'encliquetage (20), qu'un levier (82) supplémentaire basculant sous l'effet d'éventuelles forces d'accélération est logé, de manière à pouvoir basculer vers l'extérieur, par une articulation du même côté sur le levier de verrouillage (3) que celui sur lequel est formé l'ergot d'encliquetage et qu'un dispositif d'actionnement manuel est prévu à l'aide duquel le levier de verrouillage (3) peut être basculé pour le dégager des ouvertures d'encliquetage (20).

2. Ferrure de renvoi selon la revendication 1, caractérisée en ce que le dispositif d'actionnement, dans sa position de repos, bloque la position d'engagement du levier de verrouillage (3) dans une ouverture d'encliquetage (20).

3. Ferrure de renvoi selon les revendications 1 ou 2, caractérisée en ce que le levier de verrouillage (3) consiste en un levier à 2 bras dont l'un (22) porte l'ergot d'encliquetage (21) et dont l'autre (26) est attaqué par le dispositif d'actionnement.

4. Ferrure de renvoi selon l'une quelconque des revendications précédentes, caractérisée en ce que la pièce à la manière d'un chariot (2) est contrainte dans une direction de déplacement par un ressort à boudin plat (45).

5. Ferrure de renvoi selon les revendications 1 à 4, caractérisée en ce que le rail (1) présente dans sa barrette qui ne présente pas d'ouvertures d'encliquetage des échancrures (40) espacées à même distance que les ouvertures d'encliquetage (20), dans lesquelles un bras à ressort (42) de la pièce à la manière d'un chariot (2) s'engage dans chacune des positions d'engagement de l'ergot d'encliquetage (21) du levier de verrouillage (3) dans les ouvertures d'encliquetage (20).

6. Ferrure de renvoi selon l'une quelconque des revendications 1 à 5, caractérisée en ce que le rail (1) possède un profil en forme de C.

7. Ferrure de renvoi selon l'une quelconque des revendications 1 à 6, caractérisée en ce que la pièce à la manière d'un chariot 2 consiste en deux coques en plastique moulé par injection réciproquement encliquetées.

8. Ferrure de renvoi selon l'une quelconque des revendications 1 à 7, caractérisée en ce que le dispositif d'actionnement consiste en un levier d'actionnement (29) à deux bras, logé de manière à pouvoir pivoter dans la pièce à la manière d'un chariot (2), dont l'un des bras (28) s'engage dans un creux ou une échancrure triangulaire (50) du levier de verrouillage (3).

9. Ferrure de renvoi selon la revendication 8, caractérisée en ce que la position de repos du levier d'actionnement (29) dont l'extrémité intérieure (33) se trouve dans une zone de coin de l'échancrure triangulaire (50) est bloquée par des ressorts (52, 54) d'un dispositif d'encliquetage.

10. Ferrure de renvoi selon l'une quelconque des revendications 1 à 9, caractérisée en ce que l'ergot d'encliquetage (21) présente en direction de l'encliquetage un flanc à pente raide (56) et en direction opposée à l'encliquetage un flanc à pente douce (58).

11. Ferrure de renvoi selon l'une quelconque des revendications 1 à 10, caractérisée en ce que les arêtes (60) des ouvertures d'encliquetage (20) sont courbées vers l'intérieur du rail (1) de manière à ce que l'ergot d'encliquetage peut s'engager plus facilement dans l'ouverture d'encliquetage (20).

12. Ferrure de renvoi selon l'une quelconque des revendications 1 à 11, caractérisée en ce que sur le levier de verrouillage (3) est formé un deuxième nez (64) avec un axe (4) à symétrie ponctuelle par rapport au nez (21), qui, lorsque le levier de verrouillage (3) dévie pour bloquer, s'engage dans une des échancrures (40).

13. Ferrure de renvoi selon l'une quelconque des revendications 1 à 12, caractérisée en ce que le ressort de pression (66) pour contraindre le levier de verrouillage (3) est logé dans une chambre (68) qui se compose de cavités (70, 72) et d'un passage (74) du levier de verrouillage (3).

14. Ferrure de renvoi selon l'une quelconque des revendications 1 à 13, caractérisée en ce qu'une projection (75) est prévue environ en face de la dernière ouverture d'encliquetage (20) en direction de l'encliquetage et qu'elle avance latéralement dans le rail (1) de manière à ce qu'elle heurte le cas échéant le coin du levier de verrouillage (3) qui se trouve en face de l'ergot d'encliquetage (21), introduisant de la sorte une commande forcée du levier de verrouillage.

15. Ferrure de renvoi selon la revendication 5 ou une revendication dépendant de la revendication 5, caractérisée en ce qu'en plus du bras à ressort (42) un bras à ressort (78) disposé symetriquement par rapport à celui-ci s'engage chaque fois dans une ouverture d'encliquetage (20) lorsque l'autre s'engage dans une des échancrures (40).
